# EUROPEAN PATENT APPLICATION

(11) **EP 4 814 829 A1**
(43) Date of publication of application: **30.09.2026**
(21) Application number: 25193500.3
(22) Date of filing: 01.08.2025
(51) Int. Cl.: G06Q 10/0635, G06Q 30/018, G06Q 50/02, G06V 20/10

(54) **METHOD AND SYSTEM TO DETERMINE SUSTAINABILITY RISKS IN MULTI-TIER SUPPLIER CHAINS FOR EUDR COMPLIANCE**

(30) Priority: 28.03.2025 IN 202521029883
(71) Applicant: Tata Consultancy Services Limited, Maharashtra (IN)
(72) Inventor: GONGIREDDY, Rameshwar, 500081 Hyderabad, Telangana (IN); TOMAR, Samarthya, 201301 Noida, Uttar Pradesh (IN); BANERJEE, Suparna, 400710 Navi Mumbai, Maharashtra (IN); KUMAR, Rahul, 800001 Patna, Bihar (IN); KATANGUR, Pavan Kumar, 500081 Hyderabad, Telangana (IN)
(74) Representative: Goddar, Heinz J.

(57) **Abstract**

This disclosure relates generally to method and system to determine sustainability risks in multi-tier supplier chains for EUDR compliance. Multi-tier supply chain management suffer from insufficient transparency, challenges in oversight, and often, a deficit of trust. The method receives a purchase order from a user to validate source supply of raw materials procured in accordance with EUDR compliant. In response each supplier provides a list of documents for the purchase order to assess EUDR compliance. Further, spatiotemporal data is obtained from the purchase order to determine a plurality of supplier chain risk assessment factors using a multi-tier supply chain artificial intelligence (AI) model. Finally, a compliance determination model determines at least one sustainability risks for EUDR compliance to differentiate suppliers risk based on a plurality of risk assessment factors to classify into at least one of compliant, non-compliant or deemed non-compliant.

## Description

### CROSS-REFERENCE TO RELATED APPLICATIONS AND PRIORITY

The present application claims priority from Indian application no. 202521029883, filed on March 28, 2025.

### TECHNICAL FIELD

The disclosure herein generally relates to sustainability management, and, more particularly, to method and system to determine sustainability risks in multitier supplier chains for European Union Deforestation Regulation (EUDR) compliance.

### BACKGROUND

Multi-tier supply chain management represents a sophisticated framework that encompasses a focal company along with various levels of suppliers within an intricate supply chain network. One of the primary challenges faced by enterprises is supply chain risk management, which suffer from insufficient transparency, challenges in oversight, and often, a deficit of trust. The process of supply chain discovery and mapping involves identifying the participants within the supply chain and understanding interconnections between them, which is essential for ensuring reliable traceability in compliance with the European Union Deforestation Regulation (EUDR). Sub-suppliers may compromise sustainability for a range of reasons, while primary firms frequently overlook the sustainability violations committed by these sub-suppliers, despite the stipulations set forth by EUDR guidelines.

Focal firms also apply sub-supplier's sustainability management (SSM) approaches to extend sustainability and to establish sustainability compliance at sub-supplier level which brings several tangible and intangible risks to focal firms. Proving EUDR compliance is a complex challenge due to sustainability factors. Mapping producer locations, assessing suppliers and validating deforestation risk are resourceintensive activities. Implementing a supply chain sustainability risk management framework and supplier engagement strategy requires collaboration and communication between numerous functions and stakeholders across the supply chain

Existing methods are cumbersome and lack transparency in creating bottlenecks raising operational costs for enterprise(s). Moreover, these methods struggle with implementation and analysis provides effective approach to identify environmental risks, especially deforestation risks in supplier sourcing at different levels qualitatively and quantitatively. Also, existing approaches limit with indexed approach for automated data collection, analysis, alerts and recommendations, process streamlining and transparent management with a centralized platform.

### SUMMARY

Embodiments of the present disclosure presents technological improvements as solutions to one or more of the above-mentioned technical problems recognized by the inventors in conventional systems. For example, in one embodiment, a system to determine sustainability risks in multi-tier supplier chains for EUDR compliance is provided. The system includes receiving a purchase order from a user to validate source supply of raw materials procured in accordance with EUDR compliant. Each supplier is connected to at least one sub-supplier supplying the raw materials. For the purchase order from each of the supplier, a list of documents comprising one or more compliance certificates and licenses, one or more geographical coordinates indicative of raw materials sourcing location, and harvest origin or production site location are obtained. The list of documents and the purchase order are stored in a supplier database data engine, wherein each sub-supplier location is indicated in at least one certificate or document. Further, the list of documents provided by each supplier is categorized into corresponding document type by extracting relevant information from each document using computer vision and NLP techniques, where each document is categorized based on type of layout, format, and context.

Further, spatiotemporal data using timeline associated with the purchase order is obtained, wherein the spatiotemporal data includes satellite imagery data, one or more vegetation indices and covers, spectral indices, harvest origin or production site location boundaries, weather and geohazard data, forest health gain or loss, historical data, and agricultural production data. Furthermore, dynamically determining by a multi-tier supply chain artificial intelligence (AI) model, a plurality of supplier chain risk assessment factors based on relevant information extracted from the list of documents and the purchase order and generating a plurality of assessment reports. The multi-tier supply chain artificial intelligence model is integrated with a plurality of ML models to assess each supplier chain risks. Finally, a compliance determination model determines one or more sustainability risks in supplier chain for EUDR compliance based on the plurality of assessment reports and cataloguing the purchase order based on the one or more sustainability risks into at least one of a compliant, a non-compliant and deemed non-compliance and notifying the user with action insights.

**In** another aspect, a method to determine sustainability risks in multitier supplier chains for EUDR compliance is provided. The method includes receiving a purchase order from a user to validate source supply of raw materials procured in accordance with EUDR compliant. Each supplier is connected to at least one sub-supplier supplying the raw materials. For the purchase order from each of the supplier, a list of documents comprising one or more compliance certificates and licenses, one or more geographical coordinates indicative of raw materials sourcing location, and harvest origin or production site location are obtained. The list of documents and the purchase order are stored in a supplier database data engine, wherein each sub-supplier location is indicated in at least one certificate or document. Further, the list of documents provided by each supplier is categorized into corresponding document type by extracting relevant information from each document using computer vision and NLP techniques, where each document is categorized based on type of layout, format, and context.

Further, spatiotemporal data using timeline associated with the purchase order is obtained, wherein the spatiotemporal data includes satellite imagery data, one or more vegetation indices and covers, spectral indices, harvest origin or production site location boundaries, weather and geohazard data, forest health gain or loss, historical data, and agricultural production data. Furthermore, dynamically determining by a multi-tier supply chain artificial intelligence (AI) model, a plurality of supplier chain risk assessment factors based on relevant information extracted from the list of documents and the purchase order and generating a plurality of assessment reports. The multi-tier supply chain artificial intelligence model is integrated with a plurality of ML models to assess each supplier chain risks. Finally, a compliance determination model determines one or more sustainability risks in supplier chain for EUDR compliance based on the plurality of assessment reports and cataloguing the purchase order based on the one or more sustainability risks into at least one of a compliant, a non-compliant and deemed non-compliant and notifying the user with action insights.

**In** yet another aspect, there are provided one or more non-transitory machine-readable information storage mediums comprising one or more instructions which when executed by one or more hardware processors cause: receiving a purchase order from a user to validate source supply of raw materials procured in accordance with EUDR compliant. Each supplier is connected to at least one sub-supplier supplying the raw materials. For the purchase order from each of the supplier, a list of documents comprising one or more compliance certificates and licenses, one or more geographical coordinates indicative of raw materials sourcing location, and harvest origin or production site location are obtained. The list of documents and the purchase order are stored in a supplier database data engine, wherein each sub-supplier location is indicated in at least one certificate or document. Further, the list of documents provided by each supplier is categorized into corresponding document type by extracting relevant information from each document using computer vision and NLP techniques, where each document is categorized based on type of layout, format, and context.

Further, spatiotemporal data using timeline associated with the purchase order is obtained, wherein the spatiotemporal data includes satellite imagery data, one or more vegetation indices and covers, spectral indices, harvest origin or production site location boundaries, weather and geohazard data, forest health gain or loss, historical data, and agricultural production data. Furthermore, dynamically determining by a multi-tier supply chain artificial intelligence (AI) model, a plurality of supplier chain risk assessment factors based on relevant information extracted from the list of documents and the purchase order and generating a plurality of assessment reports. The multi-tier supply chain artificial intelligence model is integrated with a plurality of ML models to assess each supplier chain risks. Finally, a compliance determination model determines one or more sustainability risks in supplier chain for EUDR compliance based on the plurality of assessment reports and cataloguing the purchase order based on the one or more sustainability risks into at least one of a compliant, a non-compliant and deemed non-compliance and notifying the user with action insights.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system to determine sustainability risks associated with multi-tier suppliers for EUDR compliance according to some embodiments of the present disclosure.
FIG.2A illustrates an architecture overview of the system 100 to determine sustainability risks associated with multi-tier supplier(s) for EUDR compliance using the system of FIG. 1, in accordance with some embodiments of the present disclosure.
FIG.2B illustrates block diagram of the system 100 to determine sustainability risks associated with multi-tier suppliers for EUDR compliance using the system of FIG. 1, in accordance with some embodiments of the present disclosure.
FIG.3 is a flow diagram illustrating a method to determine sustainability risks associated with multitier suppliers for EUDR compliance using the system of FIG. 1, in accordance with some embodiments of the present disclosure.
FIG.4 illustrates a document verifier 204a of the system 100 implemented for authenticating documents provided by each of the supplier corresponding to purchase order using the system of FIG.2A in accordance with some embodiments of the present disclosure.
FIG.5 illustrates an image preprocessor 204b of the system 100 implemented for processing satellite images with multi spectral bands captured for geographical region associated with the purchase order, in accordance with some embodiments of the present disclosure.
FIG.6 illustrates a multilayer geospatial validator 204c of the system 100 operable to generate display of geospatial validation report for the supplier information purchase order using the system of FIG.1, in accordance with some embodiments of the present disclosure.
FIG.7 illustrates a multispectral terrain typology computation 204d of the system 100 to determine terrain cover type using the system of FIG.1, in accordance with some embodiments of the present disclosure.
FIG.8 illustrates a multispectral crop typology computation 204e of the system 100 to determine crop type using the system of FIG.1, in accordance with some embodiments of the present disclosure.
FIG.9 illustrates satellite vegetative timeline detector 204f of the system 100 to determine rough timeline using the system of FIG.1, in accordance with some embodiments of the present disclosure.
FIG.10A and FIG.10B illustrate implementation of ecosystem impact evaluator 204g to generate satellite vegetation tracking health report using the system of FIG.1, in accordance with some embodiments of the present disclosure.
FIG.11A and FIG.11B illustrate implementation of terrestrial area impingement detector 204h to detect encroached map using the system of FIG.1, in accordance with some embodiments of the present disclosure.
FIG.12 illustrates implementation of supply chain traceability 204i to generate supply chain traceability map for purchase order using the system of FIG.1, in accordance with some embodiments of the present disclosure.
FIG.13 illustrates implementation of origin vulnerability detector 204j to detect origin vulnerability assessment using the system of FIG.1, in accordance with some embodiments of the present disclosure.
FIG.14A and FIG.14B illustrates implementation of multitemporal analyzer 204k to determine risk gradient maps, real time disaster heatmaps and forecasting reports using the system of FIG.1, in accordance with some embodiments of the present disclosure.
FIG.15 illustrates implementation of compliance determination model to determine non-compliance and alerts stakeholders for actions, using the system of FIG.1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

### GLOSSARY:

The term "satellite vegetation" refers to the use of satellite-based remote sensing technology to monitor and analyze the vegetation on Earth's surface. It involves collection of data through satellite sensors that capture imagery and information across various spectral bands (e.g. visible and infrared spectrum). This data includes vegetation indices, multispectral images, spectral features like reflectance and absorptance from the vegetation and several geospatial features like land use and land cover classification related to vegetation on Earth. The data is then processed to evaluate vegetation health, density, distribution and changes over time.

Geospatial validation refers to assessing geospatial data captured from satellite imagery, sensors or other remote sensing systems to ensure its accuracy, consistency and alignment with declared attributes. It is an automated assessment of the declared harvest origin or production site, focusing on validation of polygon area, terrain type, crop type and a temporal analysis of vegetative growth.

EU Regulation on Deforestation-free Products (EUDR) compliance indicates that forest-based products are legally sourced, not derived from deforested areas, and do not contribute to environmental degradation as per the guidelines mentioned by the EUDR Regulatory body.

The term normalized different vegetative index (NDVI) refers to quantifying health and density of vegetation using sensor data.

Terrain typology refers to classification and characterization of the terrain based on its physical, geological and environmental attributes. It involves classifying the land surface into different types like agricultural land, forest land, urban land, residential land, water bodies and barren land based considering factors like slope, elevation, soil properties and vegetation cover. The classification of land cover is an important step in geospatial validation to validate the attributes of harvest origin or production site.

Crop typology refers to classification and characterization of crops based on their physical, biological, ecological and agricultural attributes. It involves classifying the crops into different types like EUDR adherent crops of cocoa, coffee, soy, palm oil, timber, rubber, and cattle considering factors like crop morphology, soil and water availability, topography of land, regional distribution, growing season and the duration. The classification of crop type is an important step in Geospatial Validation to validate the attributes of harvest origin/ production site.

Focal company refers to the central organization or entity within a supply chain that holds the primary responsibility for managing and overseeing the network of suppliers, sub-suppliers, and other stakeholders.

Concerns regarding sustainability throughout supply chains are increasingly recognized on a global scale. Organizations conduct pre-assessments and due diligence prior to evaluating a supplier's compliance with EUDR compliance. Establishment of a sustainability risk management framework for the supply chain, along with a strategy for engaging suppliers, necessitates cooperation and effective communication among various functionaries and stakeholders within the supply chain. However, existing methods lack transparency in providing geolocation of physical geographical areas of the harvest origin or production site and struggle with the implementation and analysis, lacking a single, effective, approach to identify environmental risks, with focus on the deforestation risks in supplier sourcing along with determining the compliance adherence for suppliers & sub suppliers across the value chain.

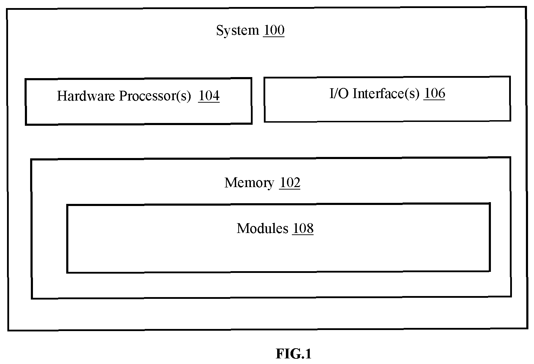

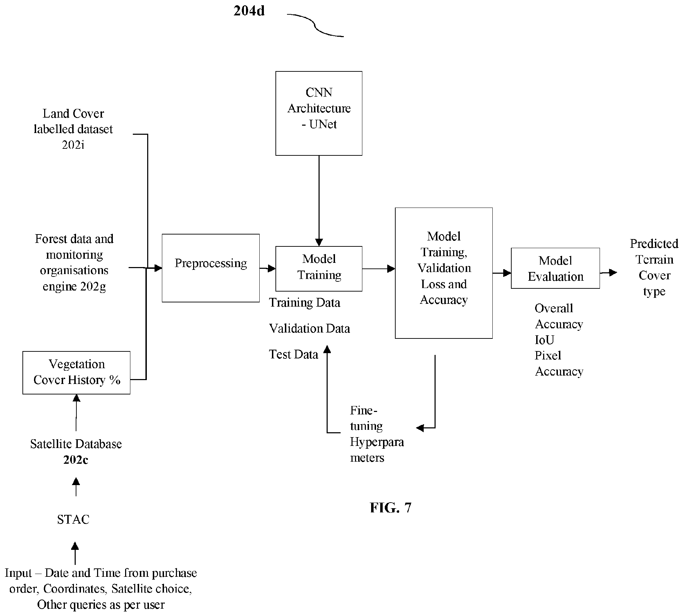

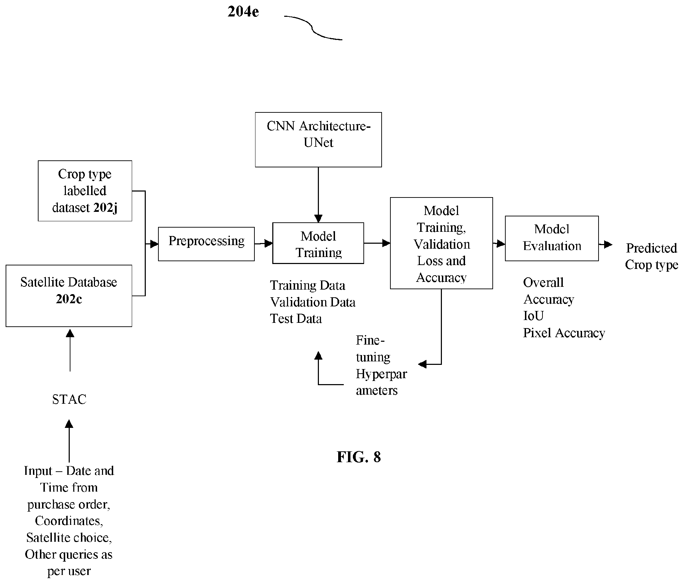

The present disclosure herein provides a method and system to determine sustainability risks in multi-tier supplier chains for EUDR compliance. The system 100 enables quantifying potential risks to determine sustainability risks of the supply chain for different supplier segments. The method of the present disclosure offers a comprehensive evaluation of hazardousness levels, vulnerability assessments, and execution of risk management strategies tailored to each supplier segment. This facilitates establishment of long-term partnerships by incorporating risk monitoring and mitigation as needed. The method addresses shortcomings of current geospatial technology based solutions by automating data collection, conducting various compliance checks, and assessing risks associated with suppliers sourcing raw materials from deforestation-free areas. It also provides appropriate corrective actions through a recommendation engine with a thorough overview of EUDR compliance. In contrast to existing methodologies, this disclosure employs multilayer geospatial validation, utilizing available satellite imagery and geospatial analysis with an indexed approach for automated data collection, analysis, alerts, and recommendations. This streamlines the process, ensuring efficient and transparent management through a centralized platform. Referring now to the drawings, and more particularly to FIG. 1 through FIG.15, where similar reference characters denote corresponding features consistently throughout the figures, there are shown preferred embodiments and these embodiments are described in the context of the following exemplary system and/or method.

FIG. 1 illustrates an exemplary system 100 to determine sustainability risks associated with supplier for EUDR compliance according to some embodiments of the present disclosure. **In** an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. **In** an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. **In** an embodiment, the system 100 can be implemented in a variety of computing systems including laptop computers, notebooks, hand-held devices such as mobile phones, workstations, mainframe computers, servers, and the like.

The I/O interface(s) 106 may include a variety of software and hardware interfaces, for example, a user interface where inputs such as purchase order, and a list of documents comprising certificates and licenses and the like are provided that facilitate multiple communications within a wide variety of networks N/W and protocol types, including wired networks, for example, LAN, cable, expression generation network, pose generation network, and image generation network etc., and wireless networks, such as WLAN, cellular and the like. **In** an embodiment, the I/O interface (s) 106 can include one or more ports for connecting to a number of external devices or to another server or devices. The system 100 receives inputs from user via an application installed on user-end devices connected to the system 100 such as a laptop, handheld device or the like.

The memory 102 may include any computer-readable medium known in the art including, for example, volatile memory, such as static random access memory (SRAM) and dynamic random access memory (DRAM), and/or non-volatile memory, disks, optical disks, and magnetic tapes.

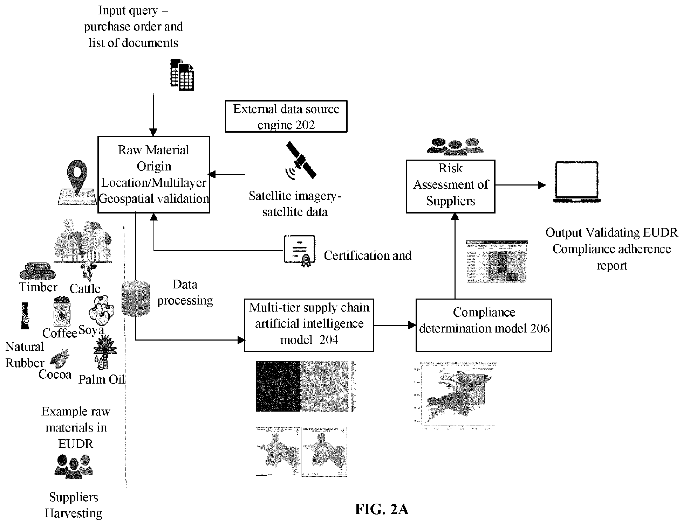

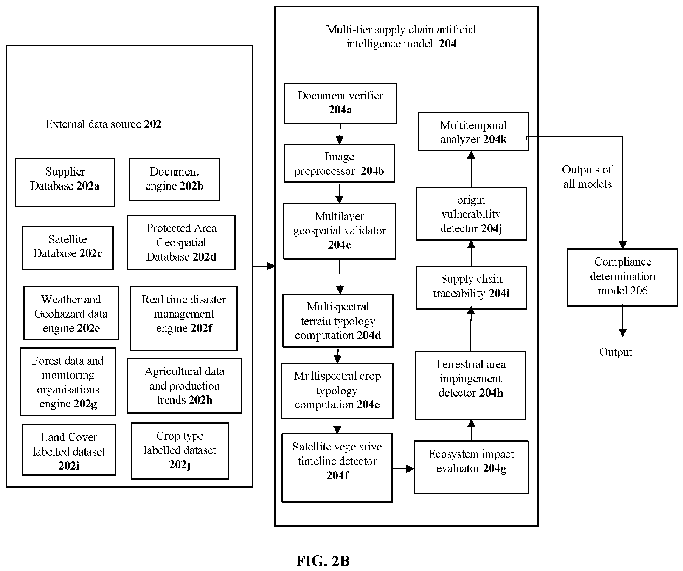

In an embodiment, the memory 102 includes a plurality of modules 110 such as an external data source engine 202, a multi-tier supply chain artificial intelligence model 204 and a compliance determination model 206 and so on as depicted in FIG.2A and sub modules as depicted in FIG.2B. The plurality of modules 110 include programs or coded instructions that supplement applications or functions performed by the system 100 for executing different steps involved in the process of generating emotional talking head video being performed by the system 100. The plurality of modules 110, amongst other things, can include routines, programs, objects, components, and data 10 structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (as shown in FIG.2A and FIG.2B).

Further, the memory 102 may comprise information pertaining to input(s)/output(s) of each step performed by the processor(s) 104 of the system 100 and methods of the present disclosure. Further, the memory 102 includes a database 108. Although the database 108 is shown internal to the system 100, it will be noted that, in alternate embodiments, the database 108 can also be implemented external to the system 100, and communicatively coupled to the system 100. The data contained within such external database may be periodically updated. For example, satellite images may be added into the database (not shown in FIG.1) and/or existing data may be modified and/or non-useful data may be deleted from the database. In one example, the data may be stored in an external system, such as a Lightweight Directory Access Protocol (LDAP) directory and a Relational Database Management System (RDBMS).

FIG.2A illustrates an architecture overview of the system 100 to determine sustainability risks associated with multi-tier suppliers for EUDR compliance using the system of FIG. 1, in accordance with some embodiments of the present disclosure. The system 100 enables to understand harvested origin or production site vegetative tracking, historical forest health, land use changes, terrain typology and crop typology, and several other risks associated to natural disasters, encroachment of protected areas, vulnerability of origin nation, along with supply chain and human rights risks. In one embodiment, the system 100 utilizes the external data source engine 202, the multi-tier supply chain artificial intelligence model 204, and the compliance determination model 206 to process the user request.

The external data source engine 202 of the system 100 includes a supplier database 202a comprising a database with purchase orders, licenses, invoices detailing the interaction of the focal company with the rest of the supply chain, a document engine 202b, a satellite database 202c, a protected area geospatial database 202d, weather and geohazard data engine 202e, real time disaster management engine 202f, forest data and monitoring organisations engine 202g, an agricultural data and production trends 202h, a land cover or terrain type labelled dataset 202i, and a crop type labelled dataset 202j.

The supplier database 202a provides basic information about each supplier, and associated sub-suppliers and farmers such as contact information, farm area details and location (address, coordinates), crop types cultivated, farming practices and timelines, certifications, deforestation-free status and licenses held. Additionally, the supplier database 202a aggregates all relevant information provided by focal company, suppliers, and sub-suppliers in the mapped supply chain. It encompasses detailed data about the products, their management, and the corresponding entities responsible at various stages of the supply chain. Key attributes includes supplier identification details, product specifications, origin and destination points, processing stages, transport logs, compliance certifications, risk ratings, and performance history. This comprehensive data allows for supplier evaluation, risk assessments, and end-to-end traceability, ensuring adherence to compliance standards such as EUDR and fostering supply chain transparency.

The document engine database provides verified information about sustainability certifications obtained by suppliers and farmers, including certification type (e.g., organic, fairtrade, rainforest alliance), certification body, certification validity period, scope of certification (e.g., specific crops, farm areas), licenses and permits information about licenses and permits required for agricultural and supply chain operations, such as water usage permits and land use permits etc.

The document engine 202b consolidates and organizes a range of essential documents, including certificates, licenses, purchase orders, invoices, statements, supplier and farmer onboarding forms, agreements, reports, and compliance-related documentation. The document engine 202b facilitates document verification providing automated validation of authenticity using ML based techniques such as optical character recognition (OCR), metadata analysis, and anomaly detection. The document engine 202b enhances extraction of relevant details using Named Entity Recognition (NER) and document classification. This helps the document engine 202b in ensuring efficient document management, seamless audits, and compliance monitoring.

The satellite database 202c integrates geospatial information derived from various satellite systems such as purchase order dates, coordinates of the harvest origin or production site, satellite specifications, and user-defined queries filtered through the spatiotemporal asset catalogue (STAC).

The satellite database provides multispectral satellite images (e.g., RGB, NIR, thermal), spectral indices (e.g., NDVI, EVI, SAVI), geometric and textural features, radiance, reflectance, and albedo values, and population density, wildfire risk, drought indices, soil moisture, crop health, water stress data etc. Also, the satellite database 202c supports analyses such as deforestation monitoring, encroachment detection, and vegetation health assessments, contributing to robust satellite based EUDR compliance frameworks.

The protected area geospatial database 202d provides geospatial coordinates and detailed information about protected areas such as national parks, wildlife sanctuaries, private forests, biosphere reserves etc. This further includes ownership and governance structures, management practices and ecological designations, area and biodiversity significance. This database ensures that supply chains avoid infringing on protected areas and provides tools for compliance with environmental conservation policies.

The weather and geohazard data engine 202e compiles historical weather data and geohazard information, including natural disasters like floods, wildfires, earthquakes, cyclones, droughts, landslides etc. It builds a comprehensive risk profile for global regions by incorporating historical meteorological data (temperature, precipitation, wind speed, etc.), disaster recurrence probabilities and intensity metrics, regional vulnerability assessments and climate change projections. Additionally, weather and geohazard data engine 202e supports decision making by enabling proactive risk management for supply chain planning, site selection, and stakeholder communication.

The real time disaster management engine 202f delivers real-time, near-real-time, and ultra-real-time disaster data. Using high-detection confidence from sensor networks, satellites, and on-ground reporting systems, it provides continuous updates as new disaster data becomes available. Also, it provides early warning alerts, including disaster type, scale, and affected areas. It also, provides integrated response strategies to mitigate impact. The engine ensures timely alerts for operational adjustments, such as rerouting shipments or mitigating risks during supply chain disruptions.

The forest data and monitoring organisations engine 202g tracks near-real-time changes in forests and land use. It includes vegetation metrics such as rate of change, frequency, and severity of vegetation gain and loss, indicators of deforestation, forest degradation, and reforestation, data on anomalies or unusual patterns like sudden forest clearing or illegal encroachments, long-term aggregated trends in forest health, carbon sequestration potential etc. Also, the engine supports sustainability efforts by providing risk assessments, compliance reports, and actionable alerts for deforestation mitigation.

The agricultural data and production trends 202h contains agricultural production and commodity-specific data. It enables the analysis of expansion trends of agricultural land for key commodities like soy, cocoa, coffee, palm oil, timber , rubber and cattle. yield statistics, farming practices, and regional production profiles. supply chain impacts of agricultural activities on land-use changes. It informs policy recommendations, production forecasts, and monitoring agricultural expansion impacts on deforestation and land-use patterns.

The terrain typology or land cover labelled dataset 202i combines geospatial satellite imagery with pixel-wise labeled and segmented datasets. It includes land cover types (e.g., forest, agriculture, urban, water bodies, barren land) . These datasets support, image segmentation and classification for land-use monitoring, training machine learning models for land cover mapping, and automated detection of land use change or deforestation.

The crop type labelled 202j provides information about crop datasets combines geospatial satellite imagery with pixel-wise labeled and segmented datasets. It includes crop types (e.g., cocoa, coffee, soy, palm oil, rubber, timber, cattle). These datasets support, image segmentation and classification for crop use monitoring, training machine learning models for crop identification, and automated detection of agricultural expansion or deforestation.

Referring now FIG.2B, in another embodiment, the multi-tier supply chain artificial intelligence model 204 processes the purchase order and the list of documents obtained utilizing the external data source engine 202. The multi-tier supply chain artificial intelligence model 204 includes a set of machine learning (ML) models collectively comprising a document verifier model 204a that processes relevant information from each document in a comprehensive and efficient manner.

Further, the image preprocessor 204b preprocesses image data using date and time from the purchase order, location coordinates, satellite type, and other queries provided by the user. The raw satellite imagery is preprocessed enhancing quality and preparing for further analysis, which outputs the atmospherically corrected multispectral satellite images.

Then, a multi-layer geospatial validator 204c for the purchase order performs polygon area validation, land cover type validation (harvest origin or production site), crop type validation (harvest origin or production site), and temporal analysis (comparative analysis of harvesting timeline & generated timeline) which outputs a geospatial validation report.

Further, a multispectral terrain typology computation 204d predicts and tags the terrain cover type for the purchase order using the input obtaining date and time from purchase order, location coordinates, satellite type, and other user specific inputs.

Further, a multispectral crop typology computation 204e predicts and tags the crop type for the purchase order using the input obtaining date and time from purchase order, location coordinates, satellite type, and other user specific inputs.

Then, a satellite vegetative timeline detector 204f predicts rough timeline of the crop grown, and comparison with the actual timeline Then, an ecosystem impact evaluator 204g generates a satellite vegetation health report and a risk assignment map for the purchase order. The vegetative health report provides vegetation status (growing, stable, unstable, degrading) along with the land use changes.

The terrestrial area impingement detector 204h provides encroachment report indicating detection flags, encroached area metrics, protected area details, encroachment map along with alerts and notification.

The supply chain traceability 204i provides automated alerts, anomaly reports, data visualization, insights and recommendations pertaining to the tracing of the products throughout the supply chain.

The origin vulnerability detector 204j using the inputs obtained from the purchase order such as date and time, location coordinates, satellite type, and other user specific requests, categorizes risk dealing with the origin nation as high risk, standard risk and low risk on a national level

Then, a multitemporal analyzer 204k integrates all input data of natural disaster monitoring, and analyze and visualize events providing outputs of anomaly detection, impact assessments, disaster trends, risk heatmaps and real-time visualizations.

Finally, the compliance determination model 206 obtains outputs from the multi-tier supply chain artificial intelligence model 204 for EUDR compliance determination. Here, the compliance determination model 206 provides insights from risk assessments, allowing them to view alerts and risk heatmaps indicative whether suppliers are at risk or not. The said model 206 facilitates passage of low or no-risk suppliers through verification process, subsequently assessing other sub-suppliers within the value chain right from their harvest origin/production site until it reaches the end consumer. Each supplier is provided with a procurement lot, and location is assigned with a compliance tag following the compliance evaluation, which categorizes them as EUDR compliant, non-compliant, or deemed non-compliant. The due diligence report is submitted by the user, representing the suppliers, to the EUDR regulatory body to ensure compliance. Referring a use case where the process starts with suppliers procuring the timber from the harvested location and then subsequently transferring it to processing centers . In this entire process of procuring to transferring they are required to submit certification and licenses (issued by Forest Stewardship Council, Forest management , Forest law, governance & enforcement trade etc. )while handing over the timber for further processing. From processing units, the wood pulp is converted to tissue rolls and then further transported to warehouses and distribution centers subsequently for further distribution to retail and end users. At each and every stage the certificates and licenses need validation and authentication for complying to EUDR norms. So, the objective is to ensure the purchase order is EUDR compliance before the product is made available to consumers.

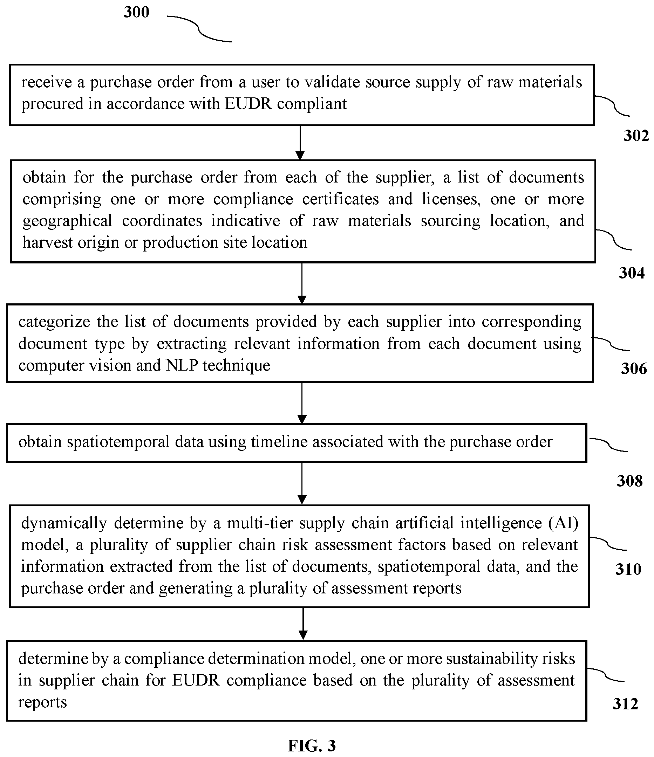

FIG.3 is a flow diagram illustrating a method to determine sustainability risks associated with multitier suppliers for EUDR compliance using the system of FIG.1, in accordance with some embodiments of the present disclosure. In an embodiment, the system 100 comprises one or more data storage devices or the memory 102 operatively coupled to the processor(s) 104 and is configured to store instructions for execution of steps of the method 300 of the present disclosure will now be explained with reference to the components or blocks of the system 100 as depicted in FIG.2A through FIG.15 in accordance with an example embodiment of the present disclosure. For example, FIG.2A through FIG. 15 illustrates exemplary flow diagrams of a processor-implemented method 300 to generate sustainability risks for supplier provided information in compliance with EUDR policy, in accordance with some embodiments of the present disclosure.

Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to FIG.3 and the steps of the method 300, at step 302 of the method 300, the one or more hardware processors 104 of the system 100 are configured by the instructions to receive a purchase order from a user to validate source supply of raw materials procured are in accordance with EUDR compliant.

Major challenge in establishing sustainable supply chain lies in effective integration and aggregation of diverse data sources. This encompasses information from suppliers, farmers, certification bodies, geospatial platforms, and other relevant information. Referring to an earlier mentioned case example where the user may request to the system 100 by providing a purchase order to assess raw materials procured from multi-tier supplier chain with EUDR compliance. The purchase order may include invoices, statements, and the like. Each supplier includes one or more sub suppliers connected for raw materials supply. Sub suppliers may be locally grown farmer, focal or the like indicative source.

Generally, EUDR compliance requires products to be produced in accordance with the relevant legislation of the country of production concerning legal status of the area of production in terms of land use rights; environmental protection; forest-related rules, including forest management and biodiversity conservation. For example, raw materials such as timber, cattle, natural rubber, coffee, palm oil, cocoa, soya and thereof as described under EUDR raw materials that the customer or user is procuring from the suppliers are eventually EUDR compliance. It is noted that each supplier may have multiple sub suppliers locally connected to geographical regions for raw material procurement spread across market (raw materials and finished products). Various suppliers upon receiving the purchase order requisition will be starting to supply, for example timber from their respective harvested location.

At step 304 of the method 300, the one or more hardware processors 104 of the system 100 are configured by the instructions to obtain from each of the supplier for the purchase order, a list of documents indicating at least one compliance certificate and licenses, one or more geographical coordinates indicative of raw materials sourcing location, and harvest origin or production site location. The list of documents and the purchase order are stored in a data engine. Each sub-supplier location and geocoordinates are indicated in at least one certificate or document present with the focal company or provided in any other way.

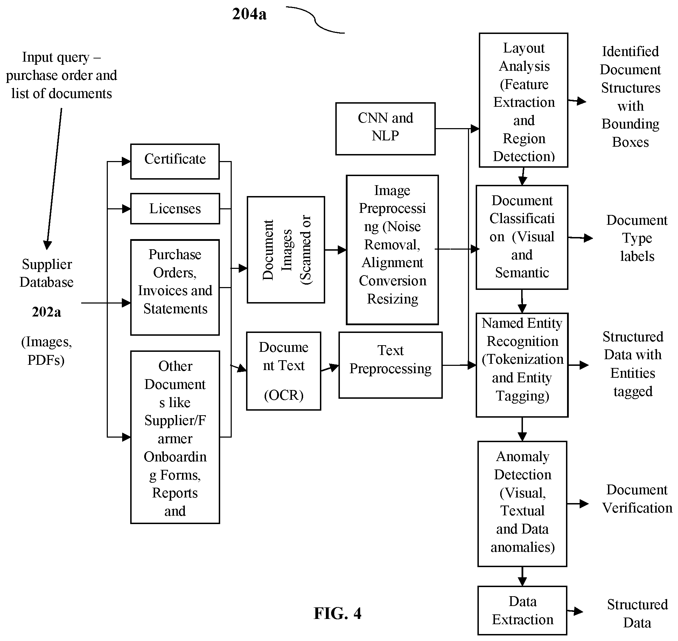

Now referring to FIG.4, the supplier database 202a provides the list of documents including compliance certificate, licenses, purchase orders, invoices, statements and other documents for validation purposes. For example, the compliance certificate and licenses may be a Forest Stewardship Council (FSC) certificate, Programme for the Endorsement of Forest certification (PEFC), Rainforest Alliance certification, Forest Law Enforcement, Government and Trade (FLEGT) certification and other regional, national and international certifications.

Further, each document is scanned either as a digital image or by using OCR scan. The synergy between computer vision and natural language processing (NLP) is used to process the list of documents using the document verifier 202a. This combination allows for the extraction of meaningful and relevant information from documents in a comprehensive and efficient manner. There are numerous documents across the supply chain that need to be used, assessed and verified. The challenge lies in processing the list of documents that is of varying formats (PDFs, images, etc.) and extraction of specific information. This requires a combination of image processing, natural language processing (NLP), and deep learning techniques. The list of documents provided by each of the supplier is diverse in nature representing various formats, layouts, and content types. Most of the certification bodies have varying formats and layouts while representing information. Each of the document is preprocessed and the steps include converting each document into a standard format (images and text), and cleaning of the data is performed by removing noise and artifacts.

The text data is tokenized by breaking the text into individual words or tokens. Further lemmatization is performed, as it helps in improving the accuracy of the model. Then, data annotation is performed by labelling documents or specific elements within documents (e.g., fields, entities, document types). This is often a timeconsuming process but crucial for supervised learning.

At step 306 of the method 300, the one or more hardware processors 104 is configured to categorize the list of documents provided by each supplier into corresponding document type by extracting relevant information from each document using computer vision and NLP techniques, wherein each document is categorized based on type of layout, format, and context.

Referring to the above example and FIG.4, the document verifier 204a applies Convolutional Neural Networks (CNNs) on each document to process the document image and preparing it for further analysis. Then, layout analysis is performed where CNNs excel at processing these document image data. CNNs can accurately identify different document elements such as text regions, images, tables, headers and layout structures (columns, rows, tables). This information is crucial for subsequent processing steps. Further, document classification is performed where CNNs can classify documents into different types (e.g., invoices, certificates, purchase requests and orders etc.) based on their visual features.

Further, information extraction is performed once text regions are identified by the CNN model, Named Entity Recognition (NER) comes into play to extract relevant information. It identifies and classifies entities like names, dates, addresses, raw materials, organizations, quantities etc. Some specific information is extracted based on defined templates or rules, using techniques like regular expressions and pattern matching. The identified entities and their relationships are extracted and structured into a desired format (e.g., JSON, XML).

The user seeks to ensure that not only is the raw material sourced from deforestation-free land, but that this land has not encroached upon any protected areas or unauthorized territories. The submitted documents and certificates undergo a comprehensive evaluation process, allowing for the assessment of suppliers based on various parameters, which categorizes them into high, medium, or low-risk classifications.

Now at step 308 of the method 300, the one or more hardware processors 104 is configured to obtain spatiotemporal data using timeline and geographical coordinates associated with the purchase order, wherein the spatiotemporal data includes satellite imagery data, one or more vegetation indices and covers, spectral indices, harvest origin or production site location boundaries, weather and geohazard data, forest health gain or loss, historical data, agricultural production data.

The geographical coordinates indicate harvest origin or production site location for specific raw materials. The satellite imagery data is processed by image preprocessor 204b for removal of atmospheric noises and to extract relevant information from geospatial data. This helps in improving accuracy and reliability of the satellite imagery, making it suitable for further analysis. Geospatial data that is to be utilized includes one or more of vegetation indices and covers, spectral indices, harvest origin or production site location boundaries, weather and geohazard data, forest health gain or loss, historical data, and agricultural production data.

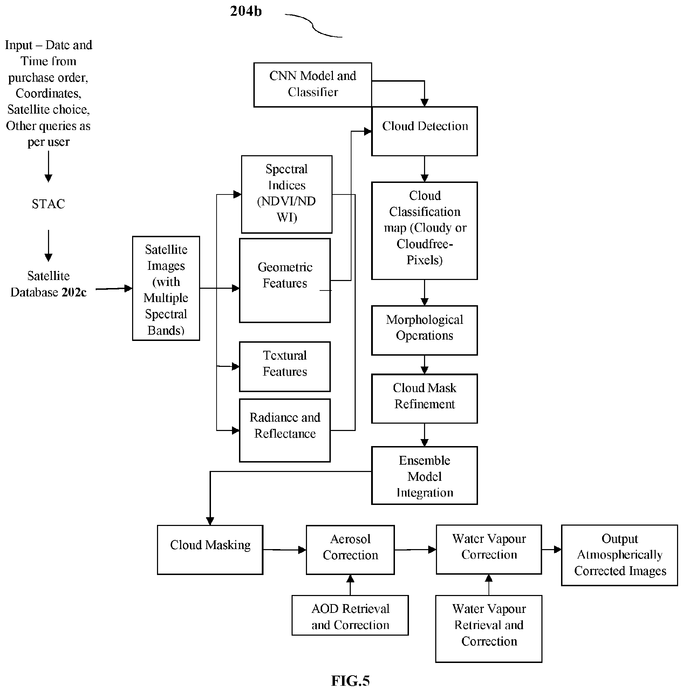

Referring now FIG.5, once the spatiotemporal details are extracted from the purchase order, the Spatiotemporal Asset Catalog (STAC) is utilized to obtain spatiotemporal data using timeline and geographical coordinates. It is noted, EUDR compliance solution requires efficient ingestion and storage of a variety of spatiotemporal data, including satellite imagery, vector data (shapefiles, GeoJSON etc.), and tabular data. Most of the supplier provide the location of harvest origins and other details as GeoJSON files. If there is no geographical data present in GeoJSON format, there is also an alternate option to manually plot or automatically ingest the boundary of the Harvest field in an interactive map. Multiple points can be plotted around the boundary of the field. After extracting the coordinates and the time period mentioned in the purchase order, all the geospatial assets are requested using the STAC.

Spatiotemporal asset catalog (STAC) is a standardized way to describe and access geospatial data. It provides a structured metadata format for discovering, accessing, and processing geospatial assets. The structure of the STAC catalog includes collections and items. JSON files represent the catalog, collections, and individual assets. The catalog is populated with metadata and links to the actual data files. For example, the STAC catalogue query is based on spatial, temporal, and thematic criteria as in Table 1,

**Table 1 - STAC catalogue query**

| |
|---|
| E.g. search = catalog.search( |
| collections=["sentinel-2-12a"], |
| intersects=area_of interest, |
| datetime = time_period, |
| query= { "eo:cloud_cover" : {"lt": 50}}) |

In the above Table 1, the satellite collection of Sentinel 2-L2A to be used, in the given area of interest for the given time period. The STAC provides metadata and links to access the desired data. It helps to directly access the data for further processing and analysis.

STAC simplifies data discovery and access, enabling efficient workflows. Spatiotemporal data is often stored as data cubes, which are multidimensional arrays that offer a structured view of data, allowing for faster and efficient analysis. Data cube provides dimensions, measures, and metadata. Dimensions define axes of cube, such as time, latitude, longitude, and other relevant variables. Measures define values stored within the cube, representing the data of interest (e.g., temperature, precipitation, cloud cover, vegetation). Metadata provides descriptive information about the data cube, including spatial and temporal coverage, projection, and data quality. STAC provides a cataloguing mechanism for data cubes, making them discoverable and accessible. By combining data cubes and STAC, geospatial data platform is created that offers, efficient data management with centralized storage and management of large datasets, and fast data access with rapid retrieval of data based on spatial, temporal, and thematic criteria.

In another embodiment, STAC is built by obtaining automated data acquisition where automated scripts and APIs are regularly employed to fetch data from various sources, including satellite data providers, government agencies, and third-party databases. Manual Data Ingestion provides user-friendly interface is present to manually upload data in supported formats (e.g., GeoTIFF, GeoJSON, CSV).

Further, on each document information data validation and quality control is performed for format validation to ensure that data adheres to specific formats and standards (e.g., GeoTIFF, GeoJSON, shapefile, GeoDatabase). Spatiotemporal consistency is performed for spatial reference and temporal resolution of the data as mentioned are checked for consistency.Data quality is assessed through metrics like accuracy, precision, and completeness. For data preprocessing and transformation, the geospatial data is aligned to a common spatial reference system (e.g. WGS84) and converted into a suitable projection for analysis (e.g. UTM). Data is subject to standardization to a common scale for a fair comparison. Cloud storage solutions (Azure Storage) are utilized to store large datasets efficiently. Integration of data into a database (PostgreSQL / PostGIS) helps in efficient querying and analysis. Spatial indexes (e.g. R-Tree, QuadTree) help to accelerate the spatial queries and analysis as well.

A version control system is implemented to track changes and maintain the data integrity. Historical data is archived for future reference and analysis. In order to handle large geographic information files chunking and parallel processing is performed. The large geographic Information files are broken down into smaller, manageable chunks that helps improve processing efficiency and reduce memory usage. Parallel processing techniques are utilized as well to process the multiple chunks simultaneously. Large geo-files are stored in cloud-based storage solutions to leverage scalable infrastructure.

GeoJSON processing and data extraction involves the use of libraries like GeoPandas to parse GeoJSON files and extract relevant information regarding the site. Spatial operations (e.g., intersection, union, buffer) are performed to analyze spatial relationships between the different layers. GeoJSON data is augmented with additional attributes from other sources (e.g., satellite imagery, demographic data, government data).

In another embodiment, referring above to postprocess the satellite imagery data the image preprocessor 204b removes atmospheric noise using cloud masking. Atmospheric noise is primarily caused by clouds, aerosols, and water vapor, significantly impacts remote sensing data. Atmospheric correction is a critical processing step to remove the effects of atmosphere. This allows for accurate estimation of the surface reflectance, essential for various applications of land cover classification, vegetation indices and subsequent analyses.

Initially, the satellite imagery data is preprocessed to perform atmospheric error correction to remove atmospheric effects such as Rayleigh and aerosol scattering to obtain surface reflectance. This image enhancement improves image contrast and clarity using histogram equalization and sharpening. Further, geometric correction is performed to ensure accurate spatial registration of the image pixels to a geographic coordinate system. Then, features are extracted from the satellite imagery such as spectral indices which provides vegetation index (NDVI) and water indices (NDVI) calculation to enhance cloud-cloud free discrimination. Further, geometric features are derived from the image shape and structure. Then, textural features are derived by analyzing image texture using the method of Gray Level Co-occurrence Matrix (GLCM) helps in capturing the spatial relationship between pixels. GLCM is a statistical texture analysis that calculates the probability of co-occurrence of pixel pairs with specific gray levels at a given distance and angle. It helps a lot in distinguishing between clouds and clear sky based on textural differences.

Further, cloud detection is applied on predefined thresholding based on spectral indices and brightness values to identify potential cloud pixels. Machine learning model classifier such as Support Vector Machines (SVM) and Random Forest is training on labelled data. Deep learning models (Convolutional Neural Networks) are also being used and trained on labeled data to classify pixels as cloud or cloud-free. CNNs directly learn the complex patterns in atmospheric effects from large datasets. Ensemble model is then used to aggregate the learners to produce better predictions.

Further, cloud mask refinement is applied to obtain morphological operations for erosion and dilation to remove noise, fill the small holes and perform smoothening in the cloud mask. This helps in removing the noise and enhance the quality of cloud mask. Then, spatial and temporal information of adjacent days, which are cloud-free also helps in most of the cases. While cloud masking is crucial, other atmospheric effects are also to be considered, if the need arises.

Aerosol correction is performed for aerosol optical depth (AOD) retrieval by estimating aerosol concentration using atmospheric models and look-up tables. Then, aerosol correction algorithms is applied for correction methods based on AOD values and spectral characteristics.

Water vapor correction is performed by estimating water vapor content using spectral bands sensitive to water vapor absorption. Furthermore, water vapor correction algorithms are applied to account for water vapor absorption and scattering.

Ground truth data includes ground-based measurements and high-resolution imagery, along with independent cloud masks such as the MODIS cloud mask, serve as references for accuracy assessment. A confusion matrix is generated to calculate accuracy, precision, recall, and F1-score, thereby evaluating the performance of the cloud mask. Additionally, visual inspection is employed to assess the cloud mask, allowing for the identification of errors and biases. By integrating these methodologies and addressing associated challenges, it is feasible to enhance the accuracy of atmospheric correction to approximately 90% and to extract dependable information from remote sensing data. Moreover, a maximum threshold of 50% cloud cover was established in the STAC data. Satellite images from the relevant period were evaluated based on cloud cover, leading to the selection of the image with the least cloud cover for subsequent analyses.

**In** another embodiment, image segmentation for land type and crop type classification is used where each pixel represents a specific location on earth's surface and contains information about the reflectance of the surface at different wavelengths. This information can be used to identify different land cover types e.g. Forest, croplands, urban areas, water bodies etc. and more about the type of crop present on the land e.g., timber, coffee, cocoa, soy etc. Image segmentation is the process of dividing an image into multiple segments that share similar characteristics. Pixels are grouped together based on their spectral, spatial and temporal properties. Image segmentation is used to identify the object of interest, harvest origin lands and forests in the present disclosure. This information is used to monitor deforestation and identify areas of potential environmental degradation.

Further data acquisition and preprocessing is performed, where satellite imagery is used to acquire high-resolution images of the field based on the provided coordinates. The images must have sufficient spatial resolution to capture the desired land cover details. Image preprocessing is employed to correct geometric distortions, if there are any, using georeferencing techniques. Further, the image quality is enhanced by fine-tuning the contrast, brightness and perform noise reduction to improve segmentation accuracy. This ensures images are preprocessed consistently, including resizing, normalization, and augmentation and images are converted to a suitable format for deep learning i.e. arrays.

Deep learning model for image segmentation utilizes U-Net, an architecture specifically designed for semantic segmentation. This model is particularly proficient in pixel-level classification. U-Net is widely recognized as an effective architecture for image segmentation tasks, as it is tailored to manage images of varying scales while capturing both local and global features. The architecture comprises key components, including a contracting path (encoder) that initially performs down sampling on the input image through convolutional and pooling layers to extract highlevel features. Following this, the expanding path (decoder) up sampling the feature maps using transposed convolutions and bilinear interpolation. This process allows for the concatenation of feature maps from the corresponding encoder layers, thereby preserving spatial information and enabling the convolutional layers to refine the segmentation map. The output is a segmentation map that matches the size of the input image, with each pixel assigned a specific class label. To enhance the model's performance, a substantial dataset of images are assembled with each paired with pixel-wise ground truth labels representing various land cover and crop types. Additionally, the data is augmented to increase diversity and improve the model's generalization capabilities, employing techniques such as rotation, flipping, and scaling to expand the dataset size.

Model Training: The model is trained on the curated dataset utilizing backpropagation along with optimization algorithms, specifically the Adam optimizer. For image segmentation tasks, the cross-entropy loss function is employed. Additionally, hyperparameters are refined such as learning rate, batch size, and the number of epochs through systematic experimentation. Multi-scale Features: The multi-scale features are integrated to effectively capture objects of varying sizes and improve feature representation by concentrating on pertinent regions of the image through Attention mechanisms. Evaluation Metrics include: - Intersection over Union (IoU): This metric assesses the overlap between the predicted segmentation masks and the ground truth. Pixel Accuracy: This metric determines the proportion of accurately classified pixels. Mean IoU (mIoU): This metric calculates the average IoU across all classes. Our approach has resulted in high-quality image segmentation for land cover and crop type classification, achieving an accuracy exceeding 95%. Each segmented region is assigned land type and crop type labels based on the model's predictions. To further enhance classification accuracy, additional features are incorporated such as spectral indices and texture-based metrics. The land is categorized into dominant land cover types, including agricultural land, forest land, urban land, residential land, water bodies, and barren land, along with their spatial distribution. For the crop types specified in the EUDR, and classifying them into categories such as cocoa, coffee, soy, palm oil, wood, rubber, and cattle.

At step 310 of the method 300, the one or more hardware processors 104 is configured to dynamically determine by a multi-tier supply chain artificial intelligence (AI) model, a plurality of supplier chain risk assessment factors based on relevant information extracted from the list of documents and the purchase order, and a plurality of assessment reports are generated, wherein the multi-tier supply chain artificial intelligence model is integrated with a plurality of ML models to assess each supplier chain risk assessment factor.

Here, the supplier chain risk assessment factors includes a document assessment performed by the document verifier 204a, a multi-layer geospatial data analysis performed by the multilayer geospatial validator 204c, a multispectral terrain typology analysis performed by the multispectral terrain typology computation 204d, a multispectral crop typology analysis multispectral crop typology computation 204e, a satellite-vegetation timeline analysis performed by the satellite vegetative timeline detector 204f, an ecosystem impact factor analysis indicating spatio temporal environmental threat performed by ecosystem impact evaluator 204g, a terrestrial area impingement analysis performed by terrestrial area impingement detector 204h, a supply chain traceability analysis performed by supply chain traceability 204i, and an origin vulnerability analysis. origin vulnerability detector 204j.

The plurality of assessment reports includes the geospatial assessment report, the risk assessment map, the encroachment map and risk report, the ecosystem impact report, natural disaster analysis, the anomaly reports and several validation results.

The multi-tier supply chain artificial intelligence (AI) model obtains output from above step 308 and the purchase order to determine the plurality of supplier chain risk assessment factors.

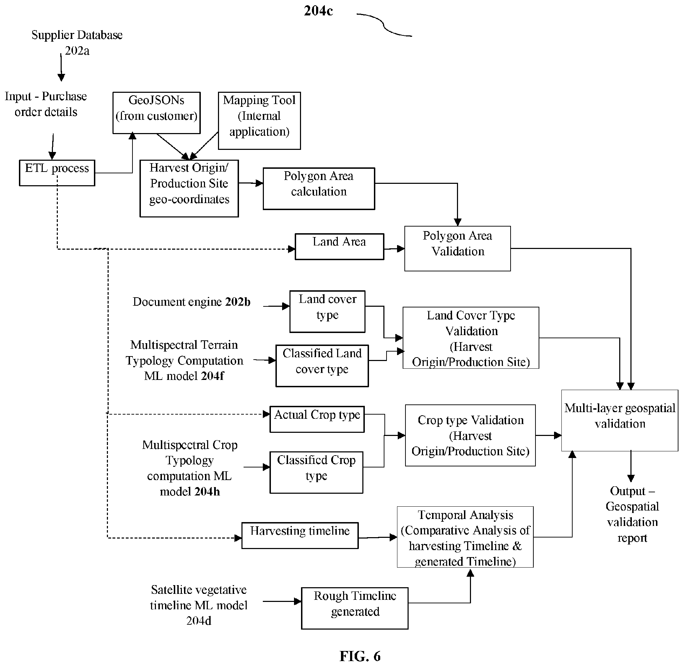

Referring now FIG.6, initially the multilayer geospatial validator 204c performs multi-layer geospatial data validation to determine discrepancies associated with geo-coordinates provided by the supplier. Geospatial validation of harvest origin entails a comprehensive approach to confirm the accuracy of reported harvest locations. The process begins with an automated evaluation of the declared area, which involves calculating the area based on the provided coordinates and comparing it to the figures stated in the relevant certificates and licenses. Any discrepancies identified may suggest potential inconsistencies. Following this, image segmentation techniques are utilized to categorize land cover types within the designated coordinates. By juxtaposing the segmented land cover with the declared area, further validation of the harvest origin can be achieved. Strong alignment between the land cover and the field enhances the credibility of the claim, while significant discrepancies may raise questions regarding the reliability of the information provided. **In** addition, further verification methods are employed, including temporal analysis of satellite imagery to monitor vegetative growth and degradation patterns, correlating these observations with the harvest date. There are also provisions for integrating ground truth data obtained from field visits to ensure precise validation. Geospatial verification of origin is conducted through rigorous certificate validation techniques for all suppliers. The validity of certificates is confirmed by examining the active certificates and their duration in relation to the purchase orders. Additional details such as address, coordinates, and quantity of raw materials are also verified, with alerts generated in the event of any anomalies.

The multilayer geospatial validator 204c obtains inputs as purchase order details and information relevant from the list of documents associated with the supplier database 202a. Here, spatiotemporal data is obtained which indicates geocoordinates with corresponding land area mentioned by the supplier, the list of documents, supplier and sub-supplier information, crop type harvested in the geocoordinates location coordinates, and a vegetative timeline. Further, the multilayer geospatial validator 204c performs polygon area validation based on (i) a polygon area calculated from the geographical coordinates of geographical location coordinates indicating harvest site or production site, and (ii) the land area. Further, land cover type validation is performed using land cover type obtained from the certificates and licenses and classified land cover type obtained from the multispectral terrain computation 204d. Then, crop type validation is performed using the actual crop type harvested obtained from the supplier database and the classified crop type obtained from the multispectral crop typology computation 204e. Then, temporal analysis is performed using expected harvesting timeline obtained from the supplier database and rough timeline generated from the satellite vegetative timeline detector 204f. Finally, multilayer geospatial validation is determined using the outputs of above steps polygon area validation, land cover type validation, crop type validation and the temporal analysis and a geospatial assessment report indicative of discrepancies and corrective actions is generated for further process in later embodiments.

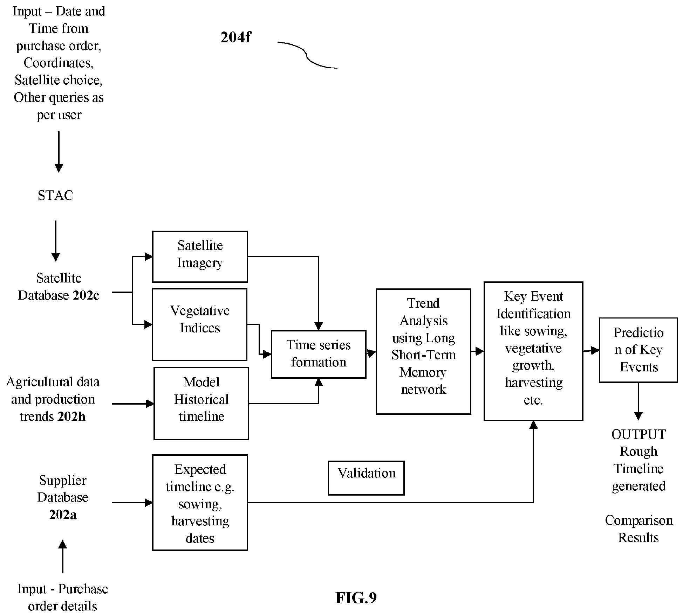

The satellite vegetative timeline detector 204f (FIG.9) is a novel model designed to track and analyze the lifecycle of crops, providing a detailed vegetative timeline and helping in the temporal analyses of Geospatial Validation. This model leverages satellite imagery in combination with advanced vegetative indices such as the Normalized Difference Vegetation Index (NDVI) and Enhanced Vegetation Index (EVI) to monitor and assess crop health and growth stages. By utilizing these indices, the model generates an approximate timeline for specific crops, capturing key events like sowing, vegetative growth, and harvesting. These events are identified with high accuracy, enabling better agricultural planning and compliance monitoring. To achieve this, the model incorporates trend analysis powered by Long Short-Term Memory (LSTM) networks, a specialized type of artificial neural network well-suited for identifying patterns in sequential data. The LSTM network is trained to recognize trends in vegetation indices over time, allowing it to pinpoint critical growth stages with precision. For instance, it can detect the rapid increase in NDVI or EVI values associated with the onset of vegetative growth or the decline that typically marks the harvesting phase. The model includes a validation process that compares the observed timeline with expected sowing and harvesting dates for the specific crop in the given region. This step ensures the accuracy of the generated vegetative timeline and highlights any deviations, such as delayed planting or premature harvesting, that may indicate potential issues. Such validation enhances the reliability of the model and provides actionable insights for stakeholders, including farmers, suppliers, and regulators. By integrating geospatial validation with vegetative timeline analysis, this model provides a robust framework for ensuring the traceability and sustainability of agricultural practices.

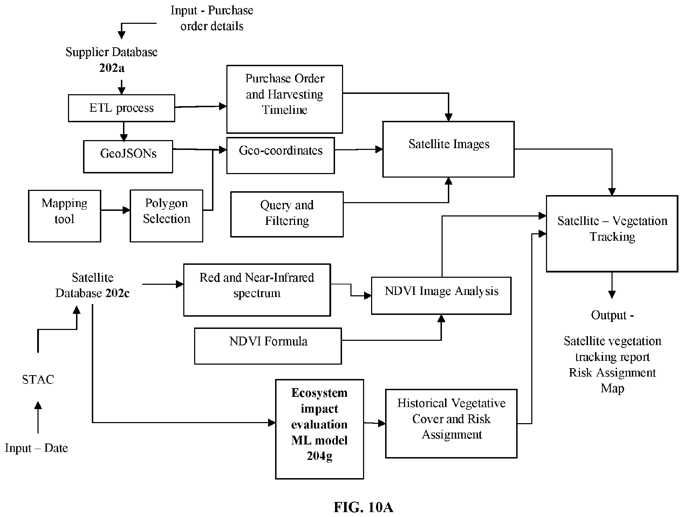

Here, the Ecosystem impact evaluator 204g (FIG. 10A) performs satellite-vegetation analysis to determine vegetative health report indicating risk assessment map insights. The satellite imagery and NDVI Analysis acquired the satellite imagery of the harvest location before and after the Purchase Order date. Normalized Differences Vegetative Index or NDVI data is also presented over time to visualize the changes in vegetative cover indicating vegetative health as $NDVI = \frac{NIR - RED}{NIR + RED}$ , where NIR and RED are the reflectance values at the near-infrared (NIR) and red (RED) bands respectively. NDVI is a simple and elegant index that, by construction, varies between -1 and 1. NDVI is proportional to the health and density of the vegetation in the area being measured. The health and density of vegetation are evaluated using NDVI values. Satellite imagery, along with NDVI, serves as essential instruments for analyzing the vitality and density of plant life. These satellite images offer a comprehensive perspective of extensive regions, capturing the Earth's surface at consistent intervals. By computing the NDVI from these images, one can quantify the vigor of vegetation. NDVI utilizes the differing reflectance characteristics of vegetation in the red and near-infrared wavelengths. Healthy vegetation absorbs a significant amount of visible red light while reflecting near-infrared light, leading to elevated NDVI values. In contrast, low NDVI values signify sparse or stressed vegetation.

The Ecosystem impact evaluator 204g obtains the following inputs such as date and time from the purchase order, coordinates, satellite type feeds into the STAC catalogue and then to the satellite database 202c, and the purchase order is provided to the supplier database 202a. Here, the model dynamically obtains satellite imagery data of the geographical location provided by the supplier. The satellite imagery data is obtained prior-harvest data from standard database and post-harvest data in real time. NDVI satellite imagery data analysis is performed which indicates health difference map of the pre-harvest data and the post-harvest data. Furthermore, a vegetative health report is generated for the geographical location coordinates from the purchase order by obtaining historical vegetation cover from ecosystem impact evaluation model based on the vegetative cover for past years and time series formation, and XG boost classification model determines vegetation status, risk assignment and trend detection. Then, a risk assessment map is determined which provides insights on forest health risk, impingement risk, FLEGT license, and FSC certificate. The forest health risk is determined by data vegetative cover percentage extracted from NDVI utilizing image analysis calculating the vegetative cover. The impingement risk is determined by utilizing the satellite imagery and finding out the coordinates if there is any overlap of reserve forests and harvested location.

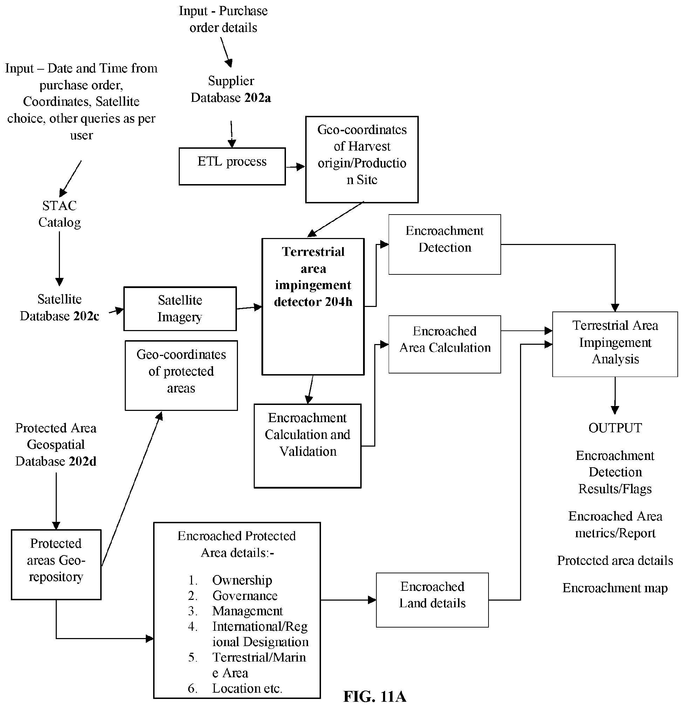

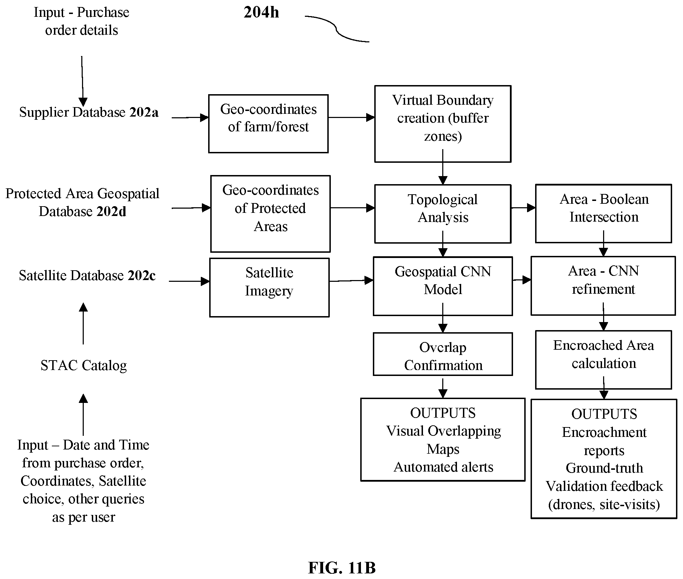

Referring now FIG.11A and FIG.11B the terrestrial area impingement analysis is performed to determine encroachment detection map using the inputs such as date and time from purchase order, coordinates, satellite type, which are provided to STAC and geo-coordinates of protected areas from the protected area geospatial database 202d. The terrestrial area impingement detection model 204h obtains the above inputs to detect terrestrial area using (i) geographical location coordinates provided by the supplier from supplier database, (ii) satellite imagery data from satellite database, and (iii) overlap between geo-coordinates of protected area with geographical coordinates. Then, terrestrial area encroached calculation is determined by obtaining geo-coordinates of forest from supplier database, geocoordinates of protected areas from protected area geospatial data, and satellite imagery from satellite data. Further, topological analysis is performed by creating virtual boundary to determine area boolean intersections. Encroached land details are obtained for the protected areas such as ownership, governance, management are compared with the harvested location thereby determining the encroached area details. Finally, encroachment detection map is determined using the terrestrial area, encroached land details and generating a encroachment map indicative of encroached protected area details and providing alerts.

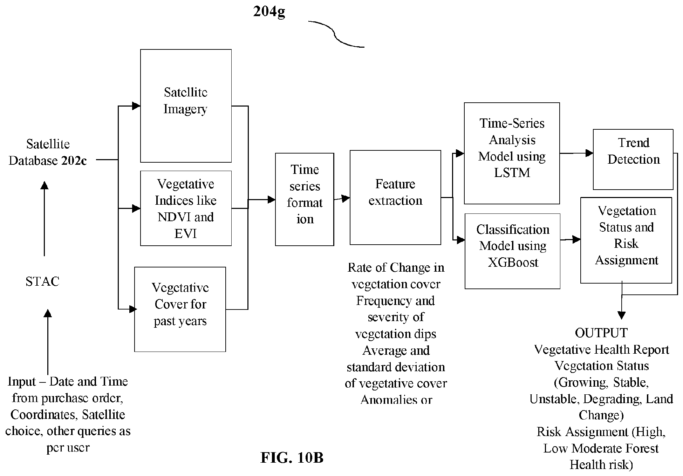

The ecosystem impact evaluator 204g (FIG.10A and FIG.10B) performs spatio temporal environmental threat analysis by monitoring natural disaster. Initially, a set of environmental factors including satellite imagery, vegetative indices, time series weather data, infrastructure and population density maps, regional disaster risk zones, and real-time detection are obtained. Then, natural disaster assessment is performed in real time based on the set of environmental factors for anomaly detection, impact assessments, and disaster trends. Further, wildfire forecasting and risk assessment is performed using weather-based forecasting, fuel moisture content, and historical wildfire data. Then, spatiotemporal environmental threat analysis is performed using the natural disaster assessment and the wildfire forecasting and risk assessment. Alerts are given to the user by analyzing disaster trends with metrics of deforestation and forest degradation and finally an ecosystem impact report is generated using disaster trends with metrics of deforestation and forest degradation.

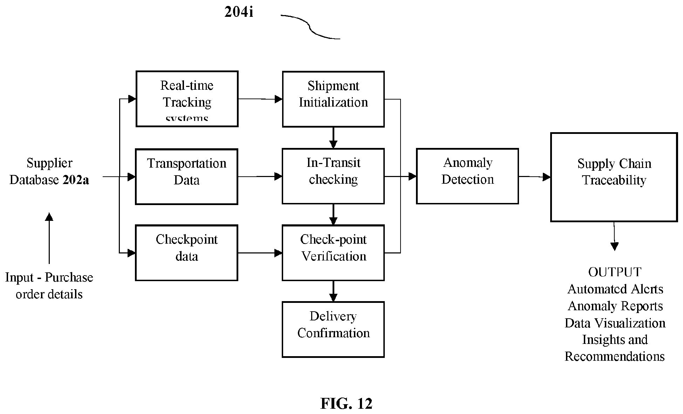

Referring now FIG.12, the supply chain traceability 204i performs supply chain traceability analysis to determine anomalies from the documents provided by the supplier in supply chain by obtaining real-time tracking, transportation data and checkpoint from supplier database validating the certifications and documents at each supplier or sub-supplier level for harvest origin and EUDR adherence in the value chain.

Shipment initialization is obtained from real-time tracking through their origin of harvest till it is handed over to supplier/sub suppliers, in-transit checking from transportation data, validation of the documents and certifications as check-point verification. Delivery confirmation of the supplied raw materials is obtained using check-point verification and an anomaly report is generated with alerts if there exists a discrepancy in the certifications throughout the value chain.

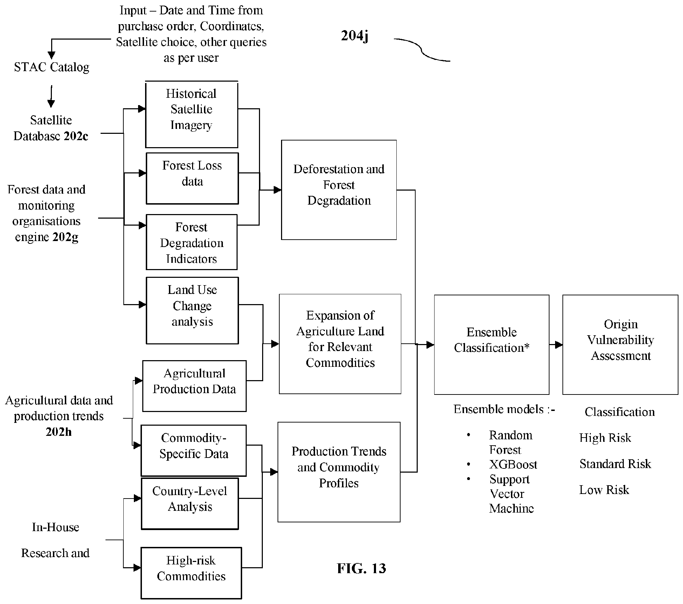

In another embodiment, FIG.13 illustrates implementation of origin vulnerability detector 204j to detect origin vulnerability assessment using the system of FIG.1, in accordance with some embodiments of the present disclosure. The origin vulnerability assessment is performed to assess stringency of EUDR compliance steps for the harvest origin or production site using the origin vulnerability detector 204j. The determination of compliance level also depends primarily on parameters namely the certification which comprises of its origin of harvest (like FSC - Forest Stewardship Council Forest Management) licenses like FLEGT ( Forest law, governance and enforcement trade) outlining various human rights, labor laws, regulations etc. Depending on the suppliers/sub suppliers satisfying any of the three or more parameters they are categorized as High risk, Medium risk. Low risk. The processor will have constraints and conditions and will instruct the engine for displaying the compliant suppliers. Suppliers failing to satisfy the conditions will have automated alerts/recommendations which will instruct the focal company to take corrective action.

The focal company, through the insights derived from risk assessment sees the alerts and the heatmap and is certain of the suppliers being at risk or not at risk. The system allows the low/no risk suppliers to pass through the check and then it moves to the other sub suppliers in the value chain ultimately reaching the manufacturing unit. Each supplier, procurement lot and location is given a compliance tag after compliance determination, which includes EUDR compliant, non-compliant and deemed non-compliant. There is a due diligence report which the customer, on behalf of the suppliers upload with the EUDR regulatory body to stay EUDR compliant. Post the manufacturing unit the wood pulp processed and finally converted into tissue rolls which are sent to warehouse distribution center for further circulation to retail.

At step 312 of the method 300, the one or more hardware processors 104 is configured to determine by a compliance determination model, one or more sustainability risks in supplier chain for EUDR compliance based on the plurality of assessment reports and cataloguing the purchase order based on the one or more sustainability risks into at least one of compliant, non-compliant and deemed non-compliance and notifying the user with action insights.

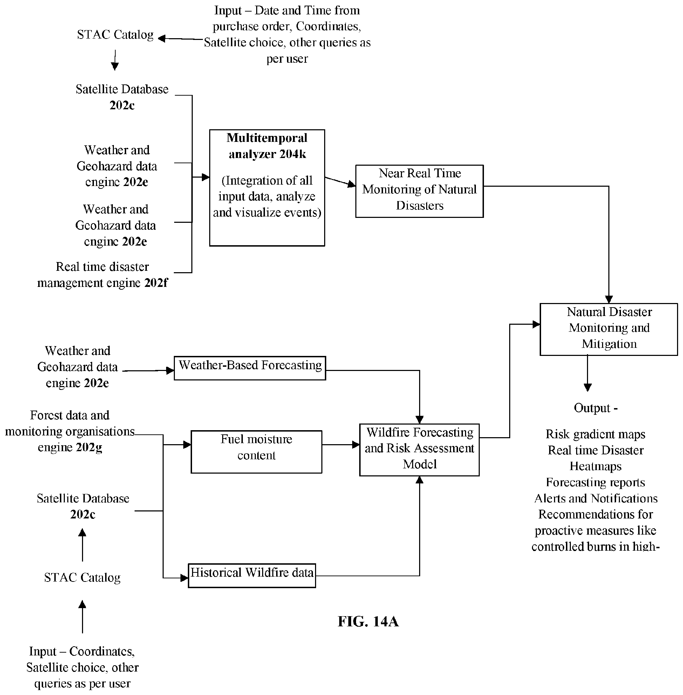

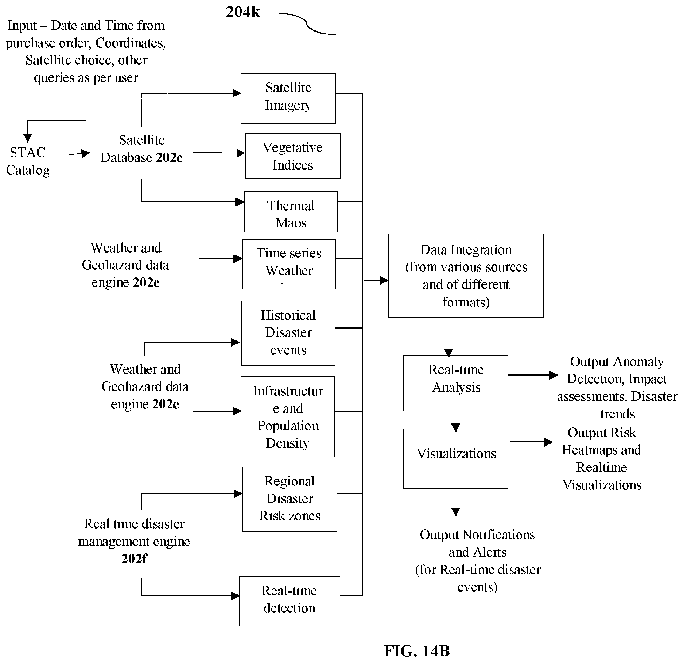

FIG.14A and FIG.14B illustrates implementation of multitemporal analyzer 204k to determine risk gradient maps and real time disaster heatmaps forecasting reports using the system of FIG.1, in accordance with some embodiments of the present disclosure.

The multitemporal analyzer 204k functions by leveraging information from satellite databases, weather data, and a geohazard data engine. It integrates vegetative indices, thermal maps, historical disaster occurrences, and the identification of various risk zones in conjunction with weather data. Following this integration, the model conducts real-time analyses, generates notifications and alerts, and identifies any anomalies, thereby establishing trends. The resulting risk heatmaps assist decisionmakers in determining appropriate corrective actions.

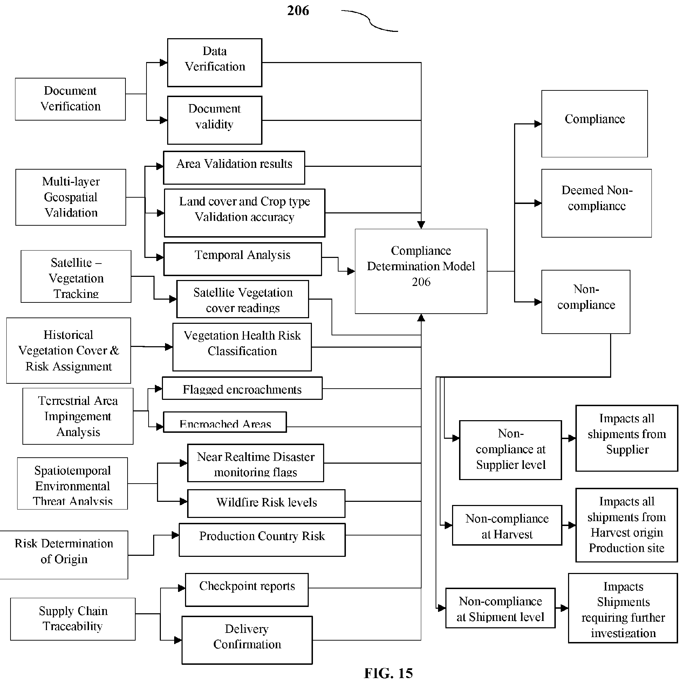

Referring now FIG. 15, the compliance determination model 206 plays a critical role in ensuring adherence to the European Union Deforestation Regulation (EUDR) by evaluating purchase orders against established guidelines. This model operates by synthesizing insights from validation reports generated by a multi-tier supply chain artificial intelligence system. These reports include data verification and validity records, area validation, terrain and crop type validation, temporal analysis, satellite vegetation cover readings, vegetation health risk classification, flagged encroachments, natural disaster risk assessments, production country risk levels, and other outputs and certifications from various interconnected steps. By integrating this comprehensive data, the compliance determination model ensures a holistic and accurate assessment of compliance levels. The compliance determination model is powered by a neural network classification system designed for high accuracy and efficiency. The neural network processes the input features derived from validation reports, employing layers of interconnected nodes with activation functions to capture complex relationships between the variables. The architecture incorporates techniques such as dropout for regularization and batch normalization to prevent overfitting and ensure robust predictions. The model uses a multi-class classification approach, assigning a compliance label to each purchase order or shipment based on EUDR standards. The potential classifications include "Compliant," "Non-Compliant," or "Deemed Non-Compliant." Additionally, the model evaluates the quality of compliance, offering granular insights into the degree of conformity with regulatory requirements. For shipments or purchase orders classified as compliant, the system greenlights them without requiring further action. Conversely, if a shipment is identified as non-compliant, stakeholders are promptly notified along with detailed explanations for the non-compliance. This notification framework highlights the specific source of the issue-whether at the supplier level, the harvest location/production site, or the shipment/lot level. Non-compliance at the supplier level could impact all shipments associated with that supplier, while non-compliance at the harvest location or production site could affect shipments originating from that region. Shipment/Lot-level non-compliance, on the other hand, requires targeted investigations of specific shipments. For cases where the model is unable to confidently classify a shipment or purchase order, it is automatically labeled as "Deemed Non-Compliant" and flagged for further due diligence. This mechanism ensures that no potentially risky shipments are overlooked, enhancing the system's reliability and the integrity of supply chain compliance processes.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.
The embodiments of present disclosure herein addresses unresolved problem of sustainability risks and compliances. The embodiments, thus provide an integrated EUDR Compliance platform that enhances supply chain traceability, automated multilayer geospatial validation, facilitates satellite vegetation monitoring, terrestrial area impingement analysis, natural disaster monitoring and mitigation, origin nation vulnerability assessment, all supporting compliance with EUDR and other sustainability regulations, thereby improving operational efficiency and decision making. Moreover, the embodiments herein further provides readiness assessments with suppliers with a minimum focus on the ability of the supplier.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processors-implemented method (300) to determine sustainability risks in supplier chain management, the method comprising:
receiving (302) via one or more hardware processors, a purchase order from a user to validate source supply of raw materials procured are in accordance with EUDR compliant;
obtaining (304) from each of the supplier via the one or more hardware processors, a list of documents indicating at least one compliance certificates and licenses, one or more geographical coordinates indicative of raw materials sourcing location, and harvest origin or production site location, wherein the list of documents and the purchase order are stored in a supplier database data engine, wherein each supplier is connected to at least one sub-supplier supplying raw materials and each sub-supplier location is indicated in at least one certificate or document;
categorizing (306) the list of documents provided by each supplier into corresponding document type via the one or more hardware processors, by extracting relevant information from each document using computer vision and NLP techniques, wherein each document is categorized based on type of layout, format, and context;
obtaining (308) via the one or more hardware processors, spatiotemporal data using timeline associated with the purchase order, wherein the spatiotemporal data includes satellite imagery data, one or more vegetation indices and covers, spectral indices, harvest origin or production site location boundaries, weather and geohazard data, forest health gain or loss, historical data, and agricultural production data;
dynamically determining (310) by a multi-tier supply chain artificial intelligence (AI) model via the one or more hardware processors, a plurality of supplier chain risk assessment factors based on relevant information extracted from the list of documents, spatiotemporal data, and the purchase order and generating a plurality of assessment reports, wherein the multi-tier supply chain artificial intelligence model is integrated with a plurality of ML models to assess each supplier chain risks; and
determining (312) by a compliance determination model via the one or more hardware processors, one or more sustainability risks within supplier chain for EUDR compliance based on the plurality of assessment reports and cataloguing the purchase order based on the one or more sustainability risks into at least one of compliant, non-compliant and deemed non-compliant and notifying the user with action insights.

2. The processor-implemented method (300) as claimed in claim 1, wherein the multi-tier supply chain AI model includes at least one of a document verifier model 204a, an image preprocessor 204b, a multi-layer geospatial data validation model 204c, a multispectral terrain typology computation model 204d, a multispectral crop typology computation model 204e, a satellite vegetative tracking model 204f, an ecosystem impact evaluation model 204g, a terrestrial area impingement detection 204h model, a supply chain traceability model 204i, a origin vulnerability detection model 204j, and a multitemporal superintendence model 204k, and
wherein the supplier chain risk assessment factors comprises a document assessment, a multi-layer geospatial data analysis, a satellite-vegetation health analysis, an ecosystem impact factor analysis indicating spatio temporal environmental threat, a multispectral terrain typology analysis, a multispectral crop typology analysis, a terrestrial area impingement analysis, a supply chain traceability analysis, and an origin vulnerability analysis.

3. The processor-implemented method (300) as claimed in claim 1, wherein the multi-layer geospatial model 204c performs multi-layer geospatial data validation to determine discrepancies associated with geo-coordinates provided by the supplier by performing the steps of:
a. obtaining for the purchase order a spatiotemporal data indicating geocoordinates with corresponding land area mentioned by the supplier, the list of documents and certifications, supplier and sub-supplier information, crop type harvested in the geo-coordinates location coordinates, and a vegetative timeline;
b. performing polygon area validation based on a polygon area calculated from the geographical coordinates of geographical location coordinates indicating harvest site or production site, and land area;
c. performing land cover type validation using land cover type obtained from the certificates and licenses and classified land cover type obtained from the multispectral terrain computation ML model;
d. performing crop type validation using the actual crop type harvested obtained from the supplier database and the classified crop type obtained from the multispectral crop typology computation model;
e. performing temporal analysis using expected harvesting timeline obtained from the supplier database and a rough timeline is generated from the vegetative timeline model; and
f. determining multi-layer geospatial data validation using the polygon area validation, the land cover type validation, the crop type validation and the temporal analysis, and generating a geospatial assessment report indicative of discrepancies to provide corrective actions.

4. The processor-implemented method (300) as claimed in claim 2, wherein the satellite-vegetation tracking model performs satellite-vegetation analysis to determine vegetative health report indicating risk assessment map insights by performing the steps of:
a. dynamically obtaining satellite imagery data of the geographical location from date and time mentioned in the purchase order along with coordinates, satellite type, wherein the satellite imagery data is obtained prior-harvest data from standard database and post-harvest data is obtained in real time;
b. performing a normalized difference vegetative index (NDVI) satellite imagery data analysis indicating health difference map of the pre-harvest data and the post-harvest data;
c. determining an vegetative health report of the geographical location coordinates from the purchase order by obtaining historical vegetation cover from the ecosystem impact evaluation model based on historical vegetative cover and time series formation, and determining an vegetation status, and an risk assignment trend detection using an XG boost classification model; and
d. determining a risk assessment map based on a forest health risk, an impingement risk, an forest law enforcement governance and trade (FLEGT) license, and forest stewardship council (FSC) certificate, wherein the forest health risk is determined by data vegetative cover percentage extracted from the NDVI utilizing image analysis calculating the vegetative cover, wherein the impingement risk is determined by utilizing the satellite imagery and finding out the coordinates if there is any overlap of reserve forests and harvested location.

5. The processor-implemented method (300) as claimed in claim 2, wherein the terrestrial area impingement detection model performs terrestrial area impingement analysis to determine encroachment detection map by performing the steps of:
a. detecting terrestrial area using geographical location coordinates provided by the supplier from supplier database, satellite imagery data from satellite database, and overlap between geo-coordinates of protected area with geographical coordinates;
b. determining terrestrial area encroached calculation by,
obtaining geo-coordinates of forest from supplier database, geocoordinates of protected areas from protected area geospatial data, and satellite imagery from satellite data;
performing topological analysis by creating virtual boundary to determine area - boolean intersections;
c. obtaining encroached land details data of the protected areas like ownership, governance, management are compared with the harvested location thereby determining the encroached area details; and
d. determining encroachment detection map using the terrestrial area, encroached land details and generating a encroachment map indicative of encroached protected area details and providing alerts.

6. The processor-implemented method (300) as claimed in claim 1, wherein the ecosystem impact evaluation model performs spatio temporal environmental threat analysis by monitoring natural disaster,
obtaining a set of environmental factors including satellite imagery, vegetative indices, time series weather data, infrastructure and population density maps, regional disaster risk zones, and real-time detection;
performing natural disaster assessment in real time based on the set of environmental factors for anomaly detection, impact assessments, and disaster trends;
performing wildfire forecasting and risk assessment using weather-based forecasting, fuel moisture content, and historical wildfire data;
validating spatio temporal environmental threat analysis using the natural disaster assessment and the wildfire forecasting and risk assessment;
providing alerts to the user by analyzing disaster trends with metrics of deforestation and forest degradation; and
generating an ecosystem impact report using disaster trends with metrics of deforestation and forest degradation.

7. The processor-implemented method (300) as claimed in claim 1, wherein the supply chain traceability model performs supply chain traceability analysis to determine anomalies from the documents provided by the supplier in supply chain by,
a. obtaining real time tracking, transportation data and checkpoint from supplier database validating the certifications and documents at each supplier or sub-supplier level for harvest origin and EUDR adherence in the value chain;
b. obtaining shipment initialization from real time tracking through source origin of harvest until it is delivered to supplier or sub suppliers, and performing in-transit validation from transportation data, validation of the documents and certifications as check-point verification;
c. determining delivery confirmation of the supplied raw materials using an check-point verification; and
d. providing an anomaly report and creating alerts if there is a discrepancy in the certifications throughout the value chain,
wherein the plurality of assessment reports includes the geospatial assessment report, the risk assessment map, the encroachment map, the ecosystem impact report, and the anomaly report, and wherein the compliance determination model determines two or more non-compliances associated with the purchase order in compliance with EUDR policy based on validation report by,
e. obtaining the plurality of assessment reports;
f. obtaining validity and authenticity of the list of documents where unsuccessful verification leads to non-compliance at supplier level potentially impacting all the shipments from non-compliant suppliers;
g. obtaining origin vulnerability assessment performed to assess stringency of EUDR compliance steps for the country housing harvest origin or production site;
h. obtaining geospatial analysis involving multi-layer geospatial validation, satellite vegetation tracking, historical vegetation cover and risk assignment, terrestrial area impingement analysis, spatiotemporal environment threat analysis, where high risk status or anomalies lead to non-compliance at the harvest origin or production site level potentially impacting all the shipments coming from there.
i. performing supply chain traceability involving real-time tracking systems, transportation and checkpoint data, where high risk status/anomalies lead to non-compliance at the shipment/lot level potentially impacting the specific shipments; and
j. determining EUDR non-compliance suppliers, locations or shipments and alerting the user with non-compliance discrepancies, and model tags.

8. A system (100) to determine sustainability risks in supplier chain management, comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a purchase order from a user to validate source supply of raw materials procured are in accordance with EUDR compliant, wherein each supplier is connected to at least one sub-supplier supplying the raw materials;
obtain for the purchase order from each of the supplier, a list of documents comprising one or more compliance certificates and licenses, one or more geographical coordinates indicative of raw materials sourcing location, and harvest origin or production site location, wherein the list of documents and the purchase order are stored in a supplier database data engine, wherein each supplier is connected to at least one sub-supplier supplying raw materials and each sub-supplier location is indicated in at least one certificate or document;
categorize the list of documents provided by each supplier into corresponding document type by extracting relevant information from each document using computer vision and NLP techniques, wherein each document is categorized based on type of layout, format, and context;
obtain spatiotemporal data using timeline associated with the purchase order, wherein the spatiotemporal data includes satellite imagery data, one or more vegetation indices and covers, spectral indices, harvest origin or production site location boundaries, weather and geohazard data, forest health gain or loss, historical data, and agricultural production data;
dynamically determine by a multi-tier supply chain artificial intelligence (AI) model, a plurality of supplier chain risk assessment factors based on relevant information extracted from the list of documents, spatiotemporal data, and the purchase order and generating a plurality of assessment reports, wherein the multi-tier supply chain artificial intelligence model is integrated with a plurality of ML models to assess each supplier chain risks; and
determine by a compliance determination model, one or more sustainability risks in supplier chain for EUDR compliance based on the plurality of assessment reports and cataloguing the purchase order based on the one or more sustainability risks into at least one of a compliant, a non-compliant and deemed non-compliance and notifying the user with action insights.

9. The system (100) as claimed in claim 8, wherein the multi-tier supply chain AI model includes at least one of a document verifier model 204a, an image preprocessor 204b, a multi-layer geospatial data validation model 204c, a multispectral terrain typology computation model 204d, a multispectral crop typology computation model 204e, a satellite vegetative tracking model 204f, an ecosystem impact evaluation model 204g, a terrestrial area impingement detection 204h model, a supply chain traceability model 204i, a origin vulnerability detection model 204j, and a multitemporal superintendence model 204k, and wherein the supplier chain risk assessment factors comprises a document assessment, a multi-layer geospatial data analysis, a satellite-vegetation health analysis, an ecosystem impact factor analysis indicating spatio temporal environmental threat, a multispectral terrain typology analysis, a multispectral crop typology analysis, a terrestrial area impingement analysis, a supply chain traceability analysis, and an origin vulnerability analysis.

10. The system (100) as claimed in claim 8, wherein the multi-layer geospatial model 204c performs multi-layer geospatial data validation to determine discrepancies associated with geo-coordinates provided by the supplier by performing the steps of:
a. obtaining for the purchase order a spatiotemporal data indicating geocoordinates with corresponding land area mentioned by the supplier, the list of documents and certifications, supplier and sub-supplier information, crop type harvested in the geo-coordinates location coordinates, and a vegetative timeline;
b. performing polygon area validation based on a polygon area calculated from the geographical coordinates of geographical location coordinates indicating harvest site or production site, and the land area;
c. performing land cover type validation using land cover type obtained from the certificates and licenses and classified land cover type obtained from the multispectral terrain computation ML model;
d. performing crop type validation using the actual crop type harvested obtained from the supplier database and the classified crop type obtained from the multispectral crop typology computation model;
e. performing temporal analysis using expected harvesting timeline obtained from the supplier database and rough timeline generated from the vegetative timeline model; and
f. determining multi-layer geospatial data validation using the polygon area validation, the land cover type validation, the crop type validation and the temporal analysis and generating a geospatial assessment report indicative of discrepancies to provide corrective actions.

11. The system (100) as claimed in claim 9, wherein the satellite-vegetation tracking model performs satellite-vegetation analysis to determine vegetative health report indicating risk assessment map insights by performing the steps of:
a. dynamically obtaining satellite imagery data of the geographical location from date and time mentioned in the purchase order along with coordinates, satellite type, wherein the satellite imagery data is obtained prior-harvest data from standard database and post-harvest data is obtained in real time;
b. performing a normalized difference vegetative index (NDVI) satellite imagery data analysis indicating health difference map of the pre-harvest data and the post-harvest data;
c. determining an vegetative health report of the geographical location coordinates from the purchase order by obtaining historical vegetation cover from the ecosystem impact evaluation model based on historical vegetative cover and time series formation, and determining vegetation status, and risk assignment trend detection using XG boost classification model; and
d. determining a risk assessment map based on forest health risk, impingement risk, an forest law enforcement governance and trade (FLEGT) license, and forest stewardship council (FSC) certificate, wherein the forest health risk is determined by data vegetative cover percentage extracted from the NDVI utilizing image analysis calculating the vegetative cover, wherein the impingement risk is determined by utilizing the satellite imagery and finding out the coordinates if there is any overlap of reserve forests and harvested location.

12. The system (100) as claimed in claim 9, wherein the terrestrial area impingement detection model performs terrestrial area impingement analysis to determine encroachment detection map by performing the steps of:
a. detecting terrestrial area using geographical location coordinates provided by the supplier from supplier database, satellite imagery data from satellite database, and overlap between geo-coordinates of protected area with geographical coordinates;
b. determining terrestrial area encroached calculation by,
obtaining geo-coordinates of forest from supplier database, geo-coordinates of protected areas from protected area geospatial data, and satellite imagery from satellite data;
performing topological analysis by creating virtual boundary to determine area - boolean intersections;
c. obtaining encroached land details data of the protected areas like ownership, governance, management are compared with the harvested location thereby determining the encroached area details; and
d. determining encroachment detection map using the terrestrial area, encroached land details and generating a encroachment map indicative of encroached protected area details and providing alerts.

13. The system (100) as claimed in claim 9, wherein the ecosystem impact evaluation model performs spatio temporal environmental threat analysis by monitoring natural disaster,
obtaining a set of environmental factors including satellite imagery, vegetative indices, time series weather data, infrastructure and population density maps, regional disaster risk zones, and real-time detection;
performing natural disaster assessment in real time based on the set of environmental factors for anomaly detection, impact assessments, and disaster trends;
performing wildfire forecasting and risk assessment using weather-based forecasting, fuel moisture content, and historical wildfire data;
validating spatio temporal environmental threat analysis using the natural disaster assessment and the wildfire forecasting and risk assessment;
providing alerts to the user by analyzing disaster trends with metrics of deforestation and forest degradation; and
generating an ecosystem impact report using disaster trends with metrics of deforestation and forest degradation.

14. The system (100) as claimed in claim 8, wherein the supply chain traceability model performs supply chain traceability analysis to determine anomalies from the documents provided by the supplier in supply chain by,
a. obtaining real time tracking, transportation data and checkpoint from supplier database validating the certifications and documents at each supplier or sub-supplier level for harvest origin and EUDR adherence in the value chain;
b. obtaining shipment initialization from real time tracking through source origin of harvest until it is delivered to supplier or sub suppliers, and performing in-transit validation from transportation data, validation of the documents and certifications as check-point verification;
c. determining delivery confirmation of the supplied raw materials using an check-point verification; and
d. providing an anomaly report and creating alerts if there is a discrepancy in the certifications throughout the value chain,
wherein the plurality of assessment reports includes the geospatial assessment report, the risk assessment map, the encroachment map, the ecosystem impact report, and the anomaly report, and wherein the compliance determination model determines two or more non-compliances associated with the purchase order in compliant with EUDR policy based on validation report by,
a. obtaining the plurality of assessment reports;
b. obtaining validity and authenticity of the list of documents where unsuccessful verification leads to non-compliance at supplier level potentially impacting all the shipments from non-compliant suppliers;
c. obtaining origin vulnerability assessment performed to assess stringency of EUDR compliance steps for the country housing harvest origin or production site;
d. obtaining geospatial analysis involving multi-layer geospatial validation, satellite vegetation tracking, historical vegetation cover and risk assignment, terrestrial area impingement analysis, spatiotemporal environment threat analysis, where high risk status or anomalies lead to non-compliance at the harvest origin or production site level potentially impacting all the shipments coming from there.
e. performing supply chain traceability involving real-time tracking systems, transportation and checkpoint data, where high risk status/anomalies lead to non-compliance at the shipment/lot level potentially impacting the specific shipments; and
f. determining EUDR non-compliance suppliers, locations or shipments and alerting the user with non-compliance discrepancies, and model tags.

15. One or more non-transitory machine-readable information storage mediums comprising one or more instructions which when executed by one or more hardware processors cause:
receiving, a purchase order from a user to validate source supply of raw materials procured are in accordance with EUDR compliant;
obtaining from each of the supplier, a list of documents indicating at least one compliance certificates and licenses, one or more geographical coordinates indicative of raw materials sourcing location, and harvest origin or production site location, wherein the list of documents and the purchase order are stored in a supplier database data engine, wherein each supplier is connected to at least one sub-supplier supplying raw materials and each sub-supplier location is indicated in at least one certificate or document;
categorizing the list of documents provided by each supplier into corresponding document type, by extracting relevant information from each document using computer vision and NLP techniques, wherein each document is categorized based on type of layout, format, and context;
obtaining, spatiotemporal data using timeline associated with the purchase order, wherein the spatiotemporal data includes satellite imagery data, one or more vegetation indices and covers, spectral indices, harvest origin or production site location boundaries, weather and geohazard data, forest health gain or loss, historical data, and agricultural production data;
dynamically determining by a multi-tier supply chain artificial intelligence (AI) model, a plurality of supplier chain risk assessment factors based on relevant information extracted from the list of documents, spatiotemporal data, and the purchase order and generating a plurality of assessment reports, wherein the multi-tier supply chain artificial intelligence model is integrated with a plurality of ML models to assess each supplier chain risks; and
determining by a compliance determination model, one or more sustainability risks within supplier chain for EUDR compliance based on the plurality of assessment reports and cataloguing the purchase order based on the one or more sustainability risks into at least one of compliant, non-compliant and deemed non-compliant and notifying the user with action insights.
